# EUROPÄISCHE PATENTANMELDUNG

(11) **EP 0 665 701 A1**
(43) Veröffentlichungstag der Anmeldung: **02.08.1995**
(21) Anmeldenummer: 94101134.8
(22) Anmeldetag: 26.01.1994
(51) Int. Cl.: H04Q 11/04, H04M 3/24

(54) **Verfahren zur Überwachung der Durchschaltewege in einer digitalen Zeitmultiplexvermittlungseinrichtung**

(71) Anmelder: SIEMENS AKTIENGESELLSCHAFT, D-80333 München (DE)
(72) Erfinder: Hesse, Dieter, Dipl.-Ing., D-81475 München (DE)

(57) **Zusammenfassung**

Die durchzuschaltenden Datenbytes (B) werden wenigstens in zwei Hälften geteilt und über voneinander unabhängige Teile (K11 bis K22) der Durchschalteeinrichtung (K1/K2) der Vermittlungseinrichtung durchgeschaltet, wobei wenigstens einer der Teile der Datenbytes von einem Parity-Bit begleitet ist, das entweder die Parität des gesamten Datenbytes oder die Parität jeweils eines der anderen Teile des Datenbytes betrifft. Nach der Durchschaltung erfolgt eine Wiedervereinigung der Teile der Datenbytes und eine dementsprechende Parity-Prüfung. Auf diese Weise lassen sich mittels einer Parity-Prüfung auch Ansteuerfehler erkennen und der Fehlerort lokalisieren.

## Beschreibung

Die Erfindung betrifft ein Verfahren zur Überwachung der Durchschaltewege für in Form von Datenbytes übertragene Informationen in einer digitalen Zeitmultiplexvermittlungseinrichtung.

Die Überwachung der Sprechwege in Zeitmultiplexvermittlungseinrichtungen ist erforderlich, um ein fehlerhaftes Arbeiten insbesondere des der Durchschaltung dienenden Teils der Vermittlungseinrichtung erkennen und lokalisieren zu können, um entweder eine Ersatzschaltung der betroffenen Teile bis zu deren Auswechslung vorzunehmen oder gar unter Umständen für einen geordneten Abbruch bestehender Verbindungen zu sorgen.

Da wegen des Zeitmultiplexbetriebs die einzelnen Datenbytes des bei einer Vermittlungseinrichtung ankommenden Datenstroms je nach Zuordnung zu einem bestimmten Nachrichtenweg ihre Zeitlage verändern, sind Datensicherungsmaßnahmen, die sich über die Gesamtheit des Datenstroms erstrecken, nicht geeignet, es muß vielmehr eine sprechwegindividuelle Fehlererkennung ermöglicht werden.

Eine Parity-Prüfung der über die einzelnen Sprechwege geführten Datenbyts wurde für eine Fehlererkennung nicht ausreichen, da beispielsweise Fehleinstellungen der Durchschaltewege nicht erkannt werden können, weil die durchgeschalteten Datenbyts in solchen Fällen zwar nicht die erwarteten aber in sich ungestört sind.

In Fällen, in denen die Durchschalteeinrichtung der Vermittlungseinrichtung gedoppelt ist, wobei die eine Hälfte der Durchschalteeinrichtung im Normalfall aktiv ist und die andere Hälfte im Standby-Betrieb zur Verfügung steht, indem bei ihr die Durchschaltewege zwar ebenfalls eingestellt werden, der ebenfalls über sie geführte Datenstrom jedoch nicht weitergegeben wird, kann ein zusätzliches Prüfungskriterium durch den Vergleich der beiden Datenströme gewonnen werden. Bei fehlender Übereinstimmung im Fehlerfall muß dann durch weitere Prüfmaßnahmen ermittelt werden, in welcher der beiden Hälften der Durchschalteeinrichtung die Störung liegt. Wenn daraufhin vorübergehend bis zur Behebung des Fehlers die gestörte Hälfte außer Betrieb genommen ist, besteht dieses zusätzliche Prüfkriterium nicht mehr.

Es bestünde zwar die Möglichkeit, die Durchschalteeinrichtung mehr als doppelt vorzusehen, in welchem Falle sogar auf eine Parity-Prüfung als die eine Prüfmaßnahme ganz verzichtet werden könnte und auch nach Außerbetriebnahme eines Teils der Durchschalteeinrichtung nach Feststellung eines Fehlers bei diesem Teil, immer noch die Möglichkeit des Erkennens eines Fehlers und die Möglichkeit einer Ersatzschaltung besteht. Eine solche Lösung ist jedoch mit entsprechend hohem Aufwand verbunden.

Die Aufgabe der Erfindung besteht daher darin, ein Verfahren zur Überwachung der Durchschaltewege in digitalen Vermittlungseinrichtungen anzugeben, das mit vertretbarem Aufwand und mit hoher Wahrscheinlichkeit auch Fehler zu erfassen gestattet, die in der Ansteuerung der Elemente der Durchschalteeinrichtung bei der Wegeeinstellung liegen.

Diese Aufgabe wird durch die im Kennzeichen angegebenen Maßnahmen gelöst.

Beim Durchführung des Verfahrens kann die Prüfung auf eine Parity-Prüfung beschränkt bleiben, die auch bei solchen Durchschalteeinrichtungen zum Erkennen von Fehlern und zwar auch von Fehlern bei der Wegeeinstellung führt, bei denen eine Doppelung zum Zwecke der Ersatzschaltung nicht vorgesehen ist.

Gemäß weiterer Ausgestaltung der Erfindung wird angegeben, wie bei Durchschalteeinheiten zu verfahren ist, die eine solche Doppelung mit aktiver Hälfte und mit in Standby-Betrieb arbeitender Hälfte aufweisen.

Je nach in weiteren Unteransprüchen angegebenen Ausführungsvarianten sind entweder günstigere Möglichkeiten der Fehlererkennung auch nach einer Ersatzschaltung gegeben oder die erforderlichen Umschaltmaßnahmen zwischen den Teilen der gedoppelten Durchschalteeinheit weniger aufwendig.

Nachstehend wird die Erfindung anhand eines Ausführungsbeispiels unter Bezugnahme auf eine Figur näher erläutert.

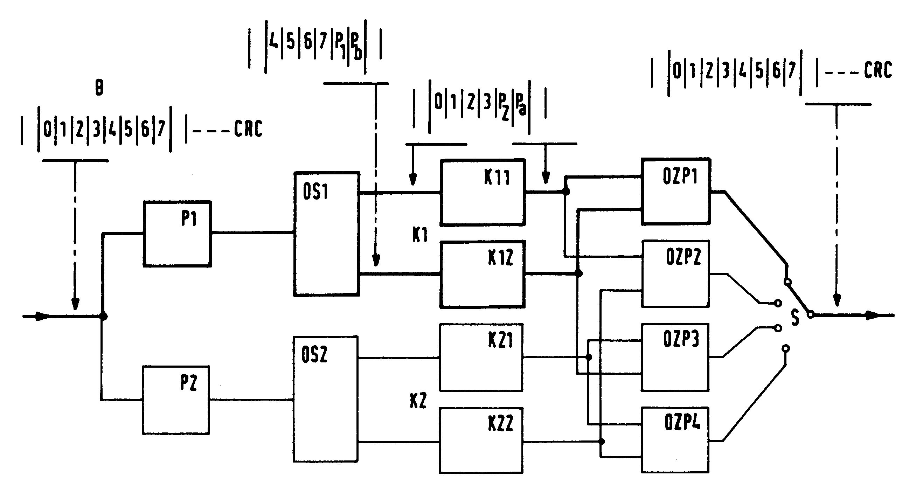

Die Figur zeigt als hier interessierende wesentliche Teile einer Zeitmultiplexvermittlungseinrichtung eine gedoppelte Durchschalteeinheit in Form eines Koppelnetzes mit den beiden Koppelnetzhälften K1 und K2. Jede dieser Koppelnetzhälften ist wiederum in zwei Teile K11 und K12 bzw. K21 und K22 unterteilt. Die eine Hälfte K1 des Koppelnetzes möge sich im aktiven Zustand befinden, was durch größere Strichstärke angedeutet ist, wogegen die andere Koppelnetzhälfte K2 sich im Standby-Betrieb befindet, indem dort den durch die Koppelnetzhälfte K1 entsprechende Parallelverbindungen aufgebaut, jedoch nicht wirksam geschaltet sind.

Die dem Koppelnetz zugeführten Dateninformationen treten in Form von beispielsweise 8 Bit umfassenden Bytes B auf und sind Bestandteil eines Datenstroms, der in seiner Gesamtheit in Hinblick auf die Überwachung auf Fehler, die auf der vorliegenden Übertragungsstrecke auftreten können, mit einem entsprechenden Code, beispielsweise einem zyklischen Code CRC (Cyclic Redundancy Code) gesichert sind. Ein solcher Code ist aber, wie eingangs angedeutet, für die Überwachung der Durchschaltewege durch die Vermittlungseinrichtung und insbesondere durch das erwähnte Koppelnetz nicht geeignet.

Bevor solche Datenbytes B das Koppelnetz K1/K2 erreichen, durchlaufen sie Einrichtungen P1 bzw. P2, in denen wenigstens ein Parity-Bit hinzugefügt wird, durch das die Bits eines solchen Bytes oder eines Teils desselben je nach Vereinbarung auf eine geradzahlige oder auf eine ungeradzahlige Parität ergänzt werden.

Die Datenbytes B haben ferner je Koppelnetzhälfte eine Einrichtung OS1 bzw. OS2 zu durchlaufen, die jeweils zwei Ausgänge aufweisen, die mit einem Eingang des ersten Teils K11 bzw. K21 und des zweiten Teils K12 bzw. K22 der betreffenden Hälfte des Koppelnetzes verbunden sind.

Durch diese Einrichtung OS1 und OS2 werden die zugeführten Datenbytes in je zwei Teile unterteilt, die dann den betreffenden beiden Teilen der Koppelnetzhälften zugeführt werden.

Ausgangsseitig der Koppelnetzhälften K1 und K2 sind Einrichtungen OZP1 bis OZP4 angeordnet, deren jeweils zwei Eingänge in sämtlichen möglichen Kombinationen mit den Ausgängen von jeweils zwei der Teile K11 bis K22 der Koppelnetzteile K1 und K2 verbunden sind. Ihre Aufgabe besteht darin, die ihnen von den betreffenden Koppelnetzteilen zugeführten Teile von Datenbytes wieder zusammenzufügen und eine Parity-Prüfung durchzuführen.

Ein Schalter S verbindet wahlweise den Ausgang einer dieser Einrichtungen OZP mit der abgehenden Übertragungsleitung Im hier durch größere Strichstärke hervorgehobenen und durch die Schalterstellung des Schalters S veranschaulichten Normalfall werden lediglich die Datenbytes ausgangsseitig weitergegeben, die über die Koppelnetzteile K11 und K12 der Koppelnetzhälfte K1 durchgeschaltet worden sind.

Im vorliegenden Fall sei angenommen, daß ein Datenbyte B durch die Einrichtungen P1 und P2 mit zwei Parity-Bits versehen wird, die jeweils vier Bit solcher Byts auf eine geradzahlige Parität ergänzen. Die Einrichtungen OS1 und OS2 spalten dann die Byts in zwei Hälften auf, von denen jede vier Bits sowie das Parity-Bit umfaßt, das zur jeweils anderen Hälfte gehört und leiten diese Hälften an die Teile K11 bis K22 der Koppelnetzhälften weiter.

Wenn nun angenommen wird, daß bei einer Durchschaltung durch den Teil K11 der Koppelnetzhälfte K1 eine Bitverfälschung auftritt, die Durchschaltung durch den zweiten Teil K12 dieser Koppelnetzhälfte jedoch fehlerfrei ist, also bezüglich des gesamten durch die Einrichtung OZP1 wiedervereinigten Bytes ein Einfachfehler vorliegt, dann wird die durch die Einrichtung OZP1 vorgenommene Paritätsprüfung das Vorliegen eines Fehlers feststellen können, wobei noch nicht erkennbar ist, bei welchem der Teile K11 und K12 der Durchschaltefehler entstanden ist. Als weitere Voraussetzung für das Vorliegen eines Einfachfehlers wird angenommen, daß die entsprechende Durchschaltung von Datenbyteteilen durch die zweite Koppelnetzhälfte K2 fehlerfrei erfolgt. Wenn nun die Einrichtung OZP3, der das über den Koppelnetzteil K12 durchgeschaltete zweite Datenbyteteil ebenfalls als eine der Eingangsgrößen zugeführt wird, Fehlerfreiheit signalisiert, kann daher eine Bitverfälschung bei der Durchschaltung durch den Koppelnetzteil K12 ausgeschlossen werden, womit der Koppelnetzteil K11 als Fehlerort festliegt.

Es wird nun angenommen, daß bei der Durchschaltung durch den Teil K11 der Koppelnetzhälfte K1 ein Ansteuerfehler auftritt, also ausgangsseitig eine Bytehälfte erscheint, deren Bits unverfälscht geblieben sind, die jedoch nicht der erwarteten Bitkombination entspricht. Ein solcher Fehler wäre, wie eingangs dargelegt, durch eine einfache Parity-Prüfung nicht erkennbar.

Wenn nun angenommen wird, daß die aufgrund des erwähnten Ansteuerfehlers durch den Teil K11 durchgeschaltete Bytehälfte zwar eine andere Parität als die erwartete Bytehälfte hat, aber von einem Parity-Bit desselben Binärwerts wie die erwartete Bytehälfte begleitet ist, oder aber zwar dieselbe Parität wie die erwartete Datenbytehälfte hat, jedoch von einem Parity-Bit begleitet ist, das einen anderen Binärwert wie das die erwartete Datenbytehälfte begleitende Parity-Bit aufweist, also insofern nur ein Einfachfehler vorliegt, dann ist ein solcher Ansteuerfehler erkennbar. Auch hier ist es wie im obenstehend beschriebenen Fall möglich, über die Feststellung des Vorliegens eines Fehlers hinaus durch Auswerten der von der Gesamtheit der Einrichtungen OZP1 bis OZP4 abgegebenen Signale den Fehlerort zu lokalisieren.

Die Wahrscheinlichkeit Ansteuerfehler zu erkennen, kann dadurch erhöht werden, daß die Koppelnetzhälften nicht nur in zwei sondern in drei oder mehrere Teile unterteilt werden und dementsprechend die Datenbytes in drei oder mehrere Teile aufgespalten werden, was natürlich eine Frage des Aufwandes ist.

Wenn nach Feststellung eines Fehlers in der aktiven Koppelnetzhälfte auf die bisher im Standby-Betrieb arbeitende Koppelnetzhälfte umgeschaltet wird, und die bisher aktive Koppelnetzhälfte außer Betrieb genommen wird, besteht immer noch die Möglichkeit der Feststellung eines Fehlers, wenn auch eine Fehlerlokalisierung nicht mehr ohne weiteres möglich ist.

Wenn jedoch alternativ zu diesem Ersatzschaltekonzept derart vorgegangen wird, daß lediglich der als Fehlerort erkannte Teil der aktiven Koppelnetzhälfte außer Betrieb genommen und durch einen entsprechenden Teil der Standby-Hälfte des Koppelnetzes ersetzt wird, also insgesamt noch drei Koppelnetzteile für die Durchschaltung und die Fehlererkennung zur Verfügung stehen, dann können nach wie vor sämtliche Fehler erkannt und lokalisiert werden.

## Patentansprüche

1. Verfahren zur Überwachung der Durchschaltewege für in Form von Datenbytes übertragene Informationen in einer digitalen Vermittlungseinrichtung **gekennzeichnet,** durch folgende Merkmale:
a) die Datenbytes werden vor ihrer Durchschaltung in wenigstens zwei Teile unterteilt,
b) die Teile der Datenbytes werden über voneinander unabhängige Teile der Duchschalteeinrichtung der Vermittlungseinrichtung durchgeschaltet, wobei
b1) wenigstens einer der Teile des Datenbytes von einem Paritybit begleitet ist, das entweder die Parität des gesamten Datenbytes oder die Parität jeweils eines der anderen Teile des Datenbytes betrifft,
c) nach der Durchschaltung erfolgt eine Wiedervereinigung der Teile des Datenbytes einschließlich der gegebenfalls mehreren Paritybits und eine dementsprechende Parityprüfung.

2. Verfahren nach Anspruch 1,
in Anwendung auf eine Durchschalteeinrichtung einer Vermittlungsstelle, die gedoppelt ist, wobei beide Hälften der aus wenigstens zwei voneinander unabhängig arbeitenden Teilen bestehen und wobei im Normalbetriebszustand die eine der beiden Hälften im Standby-Betrieb arbeitet, in dem zwar Dateninformationen in gleicher Weise wie bei der aktiven Hälfte durchgeschaltet jedoch nicht weiterübertragen werden,
**dadurch gekennzeichnet**, daß die Wiedervereinigung von über die beiden Hälften übertragenen Teilen des gleichen Dateninbytes und die dementsprechenden Parityprüfungen in sämtlichen möglichen Kombinationen erfolgt.

3. Verfahren nach Anspruch 2, **dadurchgekennzeichnet,** daß
bei Feststellung eines fehlerhaften Durchschalteweges die gesamte aktive Hälfte der Durchschalteeinrichtung außer Betrieb genommen und durch die bis dahin im Standby-Betrieb zur Verfügung gehaltene Hälfte ersetzt wird.

4. Verfahren nach Anspruch 2, **dadurch gekennzeichnet,** daß
bei Feststellung eines fehlerhaften Durchschalteweges nur der betroffene Teil der aktiven Hälfte der Durchschalteeinrichtung außer Betrieb genommen und durch einen Teil der bis dahin im Standby-Betrieb zur Verfügung gehaltenen Hälfte ersetzt wird.
